# NEUE EUROPÄISCHE PATENTSCHRIFT

(11) **EP 1 613 519 B2**
(45) Veröffentlichungstag und Bekanntmachung des Hinweises auf die Entscheidung über den Einspruch: **15.09.2010**
(45) Hinweis auf die Patenterteilung: 08.08.2007
(21) Anmeldenummer: 04741453.7
(22) Anmeldetag: 07.04.2004
(51) Int. Cl.: B60T 11/20, B60T 8/48

(54) **VORRICHTUNG ZUR ÜBERWACHUNG VON POSITION UND BEWEGUNG EINES BREMSPEDALS**
DEVICE FOR MONITORING THE POSITION AND DISPLACEMENT OF A BRAKE PEDAL
DISPOSITIF DE SURVEILLANCE DE LA POSITION ET DU MOUVEMENT D'UNE PEDALE DE FREINAGE

(30) Priorität: 07.04.2003 DE 10316035; 21.05.2003 DE 10322688; 09.12.2003 DE 10357709; 03.02.2004 DE 102004005405; 24.03.2004 DE 102004014808
(43) Veröffentlichungstag der Anmeldung: 11.01.2006
(73) Patentinhaber: Continental Teves AG & Co. oHG, 60488 Frankfurt am Main (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); RITTER, Wolfgang, 61440 Oberursel/Ts. (DE); KLIMES, Milan, 55270 Zornheim (DE); QUEISSER, Torsten, 60439 Frankfurt (DE); KREH, Heinrich, 61197 Florstadt (DE); VOIGTMANN, Thomas, 61381 Friedrichsdorf-Köppern (DE)
(86) Internationale Anmeldenummer: PCT/EP2004/050461
(87) Internationale Veröffentlichungsnummer: WO 2004/089714

(56) Entgegenhaltungen:
- EP-A- 1 254 819
- EP-B1- 0 480 608
- WO-A-02/36400
- WO-A-02/43996

## Beschreibung

Vorrichtungen zur Überwachung von Positionen und Bewegungen eines Bremspedals sind grundsätzlich bekannt.

Aus der WO 02/43996 A1 ist ein pedalbetätigbarer Hauptzylinder bekannt, welcher mit einem integrierten Stellungsgeber versehen ist, um eine Überwachung der Lage eines verschiebbaren ersten Kolbens innerhalb eines Zylinder-Gehäuse zur Verwendung innerhalb eines geregelten Bremssystems für Kraftfahrzeuge zu ermöglichen, wobei der Kolben einen Magneten als Signalgeber aufweist, welcher ein Magnetfeld in Richtung eines Sensorelementes aussendet, das ortsfest am Gehäuse angeordnet ist.

Die Sensoranordnung ist für fahrerinitiierte Bremsvorgänge im Normalbetrieb ausgelegt, bei der der zu überwachende Kolben einen definierten Betätigungsweg zurück legt. Der Magnet ist mittels einem Federelement, das sich mit einem Ende an einem Gehäuseboden abstützt, beaufschlagt und somit relativ zu dem Druckstangenkolben an einem ortsfesten Bauteil abgestützt.

Bei modernen Fahrdynamikregelungssystemen führt ein Fahrdynamikregelungsvorgang regelmäßig dazu, dass eine normalerweise ständig geöffnete hydraulische Verbindung zwischen Hauptzylinder und Radbremsen automatisch unterbrochen wird, so dass der Kolben bei Bremsvorgängen während des Fahrdynamikregelungsvorgangs (ESP-Regeleingriff) infolge geschlossener Trennventile relativ zu dem Gehäuse gewissermaßen unverschiebbar ist. Eine Ursache dafür ist, dass kein Druckmittel in Richtung Radbremsen verdrängt werden kann. Der ESP-Eingriff erfolgt fahrerunabhängig und der rudimentäre Kolbenweg reicht nicht aus, um den Magneten in den Bereich des Sensorelementes zu verschieben. Der ESP-Vorgang kann auch nicht durch den Fahrer unterbrochen werden, so dass nur eine eingeschränkte Verzögerung möglich ist. Weiterhin ist kein Betätigungssignal generierbar und es kann beispielsweise keine Bremslichtsignalisierung erfolgen. Der rückwärtige Verkehr wird erst nach Abschluss des Fahrdynamikregelungsvorgangs von dem Bremswunsch des Fahrers in Kenntnis gesetzt.

Es wäre nun möglich, für den oben genannten Zweck einen gesonderten Bremslichtschalter zu verwenden, welcher eine Bremspedalbetätigung sensiert. Jedoch wird die Teilezahl und insbesondere die Montage von Bremslichtschaltern im Fußraum eines Kraftfahrzeugs als zu aufwändig angesehen.

Es gilt daher eine Lösung für die Problematik anzubieten, auch während eines Fahrdynamikregelungsvorganges eine zuverlässige Überwachung eines Kolbens zur ermöglichen.

Zur Lösung dieser Aufgabe wird vorgeschlagen, dass der Magnet zwischen dem ersten und dem zweiten Kolben angeordnet, sowie relativ zu wenigstens einem der Kolben verschiebbar vorgesehen ist. Dadurch ist der Kolben zusammen mit seinen Anordnungsbauteilen gewissermaßen schwimmend aufgehängt. Es sind Federmittel vorgesehen, mit denen der Magnet zwischen den Kolben gehalten, sowie zu den Kolben relativ verschiebbar angeordnet ist. Der Magnet wird somit nicht mittels einer Feder zwischen dem Gehäuse und dem Kolben sklavisch ortsfest an den Kolben angebunden, sondern gewissermaßen elastisch zwischen zwei Kolben eingespannt. Diese Elastizität der Magneteinspannung ermöglicht daher eine verbesserte, und an unterschiedliche Betriebszustände angepasste Signalgenerierung mit einer relativen Verschiebbarkeit des Magnets.

Es ist sinnvoll, den Magneten zusammen mit zugehörigen Bauteilen wie insbesondere der Feder als Baugruppe vorzusehen, welche vormontiert wird, und dadurch im Rahmen einer Endmontage einfacher in das Hauptzylindergehäuse eingebracht werden kann.

In weiterer Ausgestaltung der Erfindung umfassen die Federmittel eine am ersten Kolben abgestützte Rückstellfeder und ein an dem Magneten abgestütztes weiteres Federmittel, wobei das weitere Federmittel eine größere Nachgiebigkeit aufweist als die Rückstellfeder. Je nachdem, ob die Bewegung und die Ansteuerung des Magneten in Reihe oder parallel zu den Bewegungen der beiden Kolben erfolgen sollen, ist das weitere Federmittel an dem zweiten Kolben oder an einem, durch die Verschiebung des ersten Kolbens bewegbaren Bauteil abgestützt.
In Abhängigkeit von der Kolbenverschiebung wird durch die Nachgiebigkeiten eine definierte Magnetverschiebung ermöglicht.

Das Sensorelement umfasst in vorteilhafter Ausgestaltung der Erfindung ein Hall-Element, welches nicht nur eine Schaltfunktion, sondern grundsätzlich sogar eine lineare Positionserfassung des Kolbens ermöglicht, wenn dies gewünscht ist.

Der zweite Kolben kann Mittel zur Führung des Magneten aufweisen, so dass eine präzise Signalgenerierung ermöglicht wird. Vorzugsweise weist der Kolben einen zapfenförmigen Kolbenabschnitt auf, welcher der Führung des Magneten dient und ohne größeren Aufwand bei der Herstellung des Kolbens an diesen angeformt werden kann.

Die Ausnutzung des Magnetwerkstoffes wird weiter verbessert, wenn zwischen dem Magneten und dem Kolbenabschnitt ein Träger aus nichtmagnetischem Werkstoff angeordnet ist, und wenn der Magnet in Axialrichtung zwischen Scheiben aus einem Eisenwerkstoff, sogenannten Polscheiben, angeordnet ist.
Die Scheiben ermöglichen dabei eine Bündelung des magnetischen Feldes, so dass die Wandstärke des Gehäuses ausreichend dick ausgeführt sein kann, um auch Hochdruckbeanspruchung zu widerstehen. Gleichzeitig wird die Krafteinwirkung auf den Magneten homogenisiert, indem diese auf eine größere Fläche verteilt wird, und der Magnet wird im Falle eines Bruches durch die Scheiben zusammengehalten.

Der Magnet kann dabei beispielsweise ringförmig ausgestaltet sein, wodurch das Sensorelement theoretisch in einer beliebigen Position am Umfang des Gehäuses angeordnet werden kann.

Ebenso ist es im Rahmen der Erfindung möglich, den Magneten nicht in Ringform auszugestalten, wobei eine lagerichtige Anordnung und Führung des Magneten auf dem Kolben bezüglich des Sensorelements notwendig ist.

Vorzugsweise ist der Träger einteilig und im wesentlichen zylindrisch ausgestaltet, wobei er einen Bund zur axialen Anlage des Magneten aufweist und an dem Kolbenabschnitt ein Anschlag zur Begrenzung des relativen Verschiebewegs des Trägers in bezug auf den Kolben vorgesehen ist. Das weitere Federmittel ist bei einer vorteilhaften Ausführungsform am Kolben abgestützt. Hierdurch kann eine Baugruppenbildung am zweiten Kolben unter Einbeziehung des Magneten ermöglicht werden.

Die zur Verfügung stehende Baulänge wird effizient genutzt, indem die Rückstellfeder zumindest teilweise innerhalb einer topfförmigen Wandung des Kolbens angeordnet ist, sowie mittig von einem Zapfen mit einem Anschlag durchragt ist, an dem eine Hülse derart festgelegt ist, so dass bei Betätigungsverschiebung des Kolbens das Mittel zur Führung des Magneten axial sowie teleskopisch in das Innere der Hülse eintaucht.

Eine einfache Herstellbarkeit des Trägers wird dadurch erreicht, dass der Träger gemäß einer vorteilhaften Weiterbildung der Erfindung einen ersten zylindrischen Abschnitt und einen zweiten zylindrischen Abschnitt aufweist, wobei der Magnet auf dem zweiten zylindrischen Abschnitt des Trägers angeordnet und der Träger mit seinem zweiten zylindrischen Abschnitt auf dem Kolbenabschnitt des zweiten Kolbens geführt ist. Zur Führung und Verdrehsicherung weist der Träger vorzugsweise radial nach innen gerichtete Vorsprünge auf, welche in Ausnehmungen des zweiten Kolbenabschnittes eingreifen. Dadurch wird eine präzise Signalgenerierung ermöglicht.

Eine weitere Baugruppenbildung wird erleichtert, indem der Träger mehrteilig ausgestaltet ist und eine Federhülse sowie eine Magnethülse aufweist, wobei an der Federhülse radial nach außen gerichtete Vorsprünge vorgesehen sind, welche zur Verbindung mit der Magnethülse zwischen radial nach innen gerichteten Vorsprünge der Magnethülse angeordnet sind, wobei die Vorsprünge zur Führung und Verdrehsicherung des Trägers auf dem Kolbenabschnitt in Ausnehmungen des zweiten Kolbenabschnittes eingreifen und der Magnet auf der Magnethülse angeordnet ist.

Bei einen weiteren, vorteilhaften Ausführungsform der Erfindung sind die Rückstellfeder und das weitere Federmittel anhand eines (Feder-)Käfigs derart elastisch vorgespannt zusammengefügt, dass eine Betätigungsverschiebung des Kolbens eine Kompression der Rückstellfeder sowie eine Expansion des weiteren Federmittels ermöglicht, um eine proportionale Relativverschiebung des Magneten in bezug auf den Kolben zu erlauben. Die Zusammenfassung des Magneten sowie der Federelemente innerhalb der Baugruppe des Federkäfigs ermöglicht eine rationelle Montage, weil beispielsweise die lagerichtige Montage des Magneten an der Baugruppe nachgeprüft werden kann.

In weiterhin vorteilhafter Ausgestaltung der Erfindung weist der Feder-Käfig eine Hülse zur Lagerung des Magneten und eine, daran begrenzt verschiebbar angeordnete sowie durch Rückstellfeder und Federmittel beaufschlagte Federaufnahme auf, welche bei einer Betätigungsverschiebung des Kolbens derart an den zweiten Kolben anlegbar ist, dass Hülse und Magnet unter Expansion des Federmittels relativ zu dem zweiten Kolben in Betätigungsrichtung verschoben werden. Die Expansion des Federmittels wird ermöglicht, indem durch die Kolbenverschiebung und Kompression der Rückstellfeder die Fesselung der Hülse an eine Druckstange verringert wird.

In vorteilhafter Weiterbildung der Erfindung weist der Käfig eine erste Hülse und eine zweite Hülse zur Vorspannung der Rückstellfeder sowie einen Träger auf, wobei bei einer Betätigungsverschiebung des Kolbens der Magnet unter Expansion des weiteren Federmittels relativ zu dem Kolben in Betätigungsrichtung (A) verschoben wird. Die Expansion des Federmittels wird ermöglicht, indem durch die Kolbenverschiebung und Kompression der Rückstellfeder die Fesselung der zweiten Hülse an eine Druckstange verringert wird.

Gemäß einer weiteren vorteilhaften Ausführungsform ist der Magnet auf der zweiten Hülse geführt angeordnet und der Träger weist radial nach außen gerichtete Vorsprünge auf, welche in Ausnehmungen der zweiten Hülse geführt sind. Vorzugsweise ist der Magnet in Axialrichtung zwischen Scheiben aus einem Eisenwerkstoff angeordnet, welche radial nach innen gerichtet Vorsprünge und Stege aufweisen, welche in den Ausnehmungen der zweiten Hülse geführt sind. Die zweite Hülse weist vorteilhafterweise auf einer Innenseite einen Absatz auf und das weitere Federmittel ist zwischen dem Absatz und der Scheibe vorgespannt angeordnet. Dadurch wird eine präzise Signalgenerierung ermöglicht.

Eine weitere vorteilhafte Ausführungsform der Erfindung sieht vor, ein weiteres Federmittel zwischen der ersten Hülse und dem Träger vorgespannt anzuordnen.

Bei nicht beanspruchten Vorrichtungen wird eine einfache Positionierung des Sensorelementes ermöglicht, indem das Sensorelement in einer Aufnahme angeordnet ist, welche in einer definierten Position an dem Gehäuse fixierbar ist. Die Vorteile treten insbesondere ein, wenn die Aufnahme in Betätigungsrichtung eines Kolbens sowie relativ zu dem Gehäuse justierbar und in einer definierten Position fixierbar ist.

Vorteilhafte Austauschbarkeit ist gegeben, wenn das Sensorelement zusammen mit starren Leiterelementen formschlüssig in der Aufnahme aufgenommen ist, und wenn eine elektrische Verbindungsleitung in eine Steckvorrichtung der Aufnahme einsteckbar ist.

Eine definierte Positionierung wird ermöglicht, wenn das Gehäuse einen Anschlag für die Aufnahme aufweist, und wenn zwischen Anschlag und Aufnahme in Ihrem Abstandsmaß genau tolerierte Distanzelemente für die Bereitstellung eines definierten Abstandes angeordnet sind.

Eine bauraumneutrale Positionierung der peripher zu montierenden Bauteile wird ermöglicht, wenn die Aufnahme zwischen zwei Druckmittelzulaufbohrungen im Gehäuse angeordnet ist. Dadurch wird die Sensierung eines Druckstangenkolbens ermöglicht. Gemäß einer anderen Bauform mit Sekundärkolbensensierung wird die Aufnahme an einem Gehäuseende vorgesehen.

Die Zeichnung zeigt vorteilhafte Ausgestaltungen der Erfindung im Schnitt, welche nachstehend im Einzelnen beschrieben werden.

Eine Fahrzeugbremsanlage umfasst neben Radbremsen eine, mittels Rohr- und Schlauchleitungen daran angebundene Hydraulikeinheit mit stromlos geöffneten oder geschlossenen Ventilen .(Einlass-, Auslass-, Trenn- sowie Umschaltventile, wobei letztere einer Änderung in der Ansaugleitung der Pumpe zwecks Druckerzeugung in wenigstens einer Radbremse dienen) sowie eine integrierte Rückförder- oder Druckerhöhungspumpe und einen pedalbetätigbaren Hauptzylinder 1, mit einem ersten und einem zweiten Kolben 2,3 für erste und zweite Druckräume 4,5, wobei die Kolben 2,3 zur Druckmittelversorgung von paarweise in Bremskreisen zusammengefassten Radbremsen verschiebbar innerhalb einem Gehäuse 6 angeordnet sind. Es versteht sich, dass dem Hauptzylinder 1 ein Bremskraftverstärker zur Erzeugung einer Servokraft vorgeschaltet sein kann, auch wenn diese Aufgabe grundsätzlich durch eine andere Druckerhöhungsquelle - wie beispielsweise die Pumpe - erfüllt werden kann.

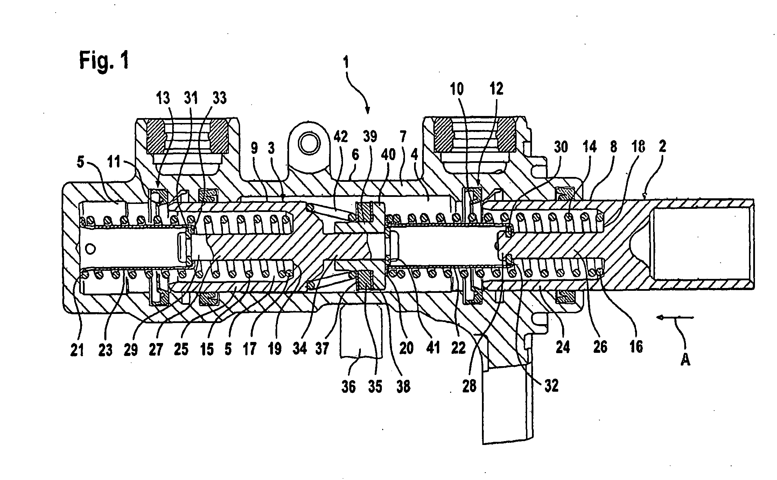

Der Hauptzylinder 1 der Fig. 1 bis 5 ist vom sogenannten Plunger-Typ mit ortsfest in einer Gehäusewandung 7 angeordneten, und an einer Kolbenwandung 8,9 mit einer Dichtlippe 10,11 anliegenden Dichtmanschetten 12,13 zur Abdichtung der Druckräume 4,5. Die Dichtlippen 10,11 können in Richtung Radbremse überströmt werden, falls ein Druckgefälle zwischen nicht gezeichnetem Druckmittelvorratsbehälter und Radbremse eingestellt wird. Für den unbetätigten Betriebszustand wird ferner zwischen den beiden Druckräumen 4,5 eine druckausgleichende Verbindung ermöglicht, so dass für diesen unbetätigten Betriebszustand auch zwischen den beiden Bremskreisen ein genereller Druckausgleich besteht.

Jedem der Kolben 2,3 ist eine Rückstellfeder 14,15 zugeordnet, welche mit einem Ende 16,17 an einem Kolbenboden 18,19 und mit einem anderen Ende über einen Kragen 20,21 einer Hülse 22,23 mittelbar am Gehäuse 6 abgestützt ist. Die Rückstellfeder 14,15 wird bei Kolbenverschiebung in eine Betätigungsrichtung A komprimiert, und zwecks Kolbenrückstellung expandiert.

Nachstehend wird im Einzelnen auf die Ausführungsform nach Fig. 1 eingegangen. Ausgehend von dem Kolbenboden 18,19 verfügen die Kolben 2,3 über eine topfförmige Wandung 24,25, innerhalb derer die Rückstellfeder 14,15 zumindest teilweise angeordnet ist. Die Wandung 24,25 wird mittig von einem zentrischen Zapfen 26,27 durchragt, der vor seinem axialen Austritt aus der Wandung 24,25 endet. Dieses Ende 28,29 ist mit einem Anschlag 30,31 für die Hülse 22,23 versehen, der mit einem Kragen 32,33 derart zusammenwirkt, dass die Hülse 22,23 relativ zu dem Zapfen 26,27 begrenzt teleskopierbar ist. Mit anderen Worten wird die Hülse 22,23 mit Rückstellfeder 14,15 bei Betätigung in das Kolbeninnere gedrängt. Wie zu ersehen ist, handelt es sich bei dem Anschlag 30,31 vorzugsweise um eine, an den Zapfen 26,27 angenietete - insbesondere Taumelvernietete - Ringscheibe. Das anderseitige Ende der Hülse 22,23 verfügt über den tellerartigen Kragen 20,21 zur Anlage der Rückstellfeder 14,15.

Der zweite Kolben 3 verfügt zusätzlich über einen, dem Zapfen 27 entgegengerichteten zapfenförmigen Kolbenabschnitt 34, welcher als Mittel zur Führung eines Permanent-Magneten 35 dient.

Der Magnet 35 dient als Signalgeber für einen Stellungsgeber und sendet ein Magnetfeld radial in Richtung eines Sensorelementes 36 - vorzugsweise in Gestalt eines Hall-Sensors, eines magnetoresistiven Sensors oder eines Reed-Kontaktes - aus, das ortsfest am Gehäuse 6 vorgesehen ist, und mit einer nicht gezeichneten elektronischen Steuereinheit verbindbar ist, um eine Lageerfassung zu ermöglichen. Dabei ist zu berücksichtigen, dass ein Hall-Sensor oder ein magnetoresistiver Sensor als aktives Bauteil auch eine Stromversorgung erfordert, während ein Reed-Kontakt als gesteuerter Schalter lediglich als Öffner oder Schließer eines Stromkreises wirksam ist. Das Sensorelement 36 kann zum Zweck einer besseren Vernetzung innerhalb eines Bus-Systems auch über lokale Intelligenz in Form eines sogenannten ASIC (Application Specific Integrated Circuit) verfügen.

Der Magnet 35 ist ringförmig und wie ersichtlich zwischen Scheiben 37,38 aus magnetischem Werkstoff auf einem zylindrischen Träger 39 aus nichtmagnetischem Werkstoff angeordnet, welcher über einen Bund 40 zur axialen Anlage des Magneten 35 verfügt. Der Träger 39 ist auf dem zapfenförmigen Kolbenabschnitt 34 begrenzt verschiebbar und zur Verschiebewegbegrenzung des Magneten 35 mit einem endseitigen Anschlag 41 versehen, der wie der vorstehend beschriebene Anschlag 30,31 ausgebildet sein kann. Wie aus Fig. 1 hervorgeht, ist der Träger 39 mit dem Magneten 35 einerseits von der Rückstellfeder 14 des ersten Kolbens 2 und andererseits von einem weiteren Federmittel 42, welches an dem zweiten Kolben 3 abgestützt ist, beaufschlagt, so dass der Magnet 35 gewissermaßen zwischen den Kolben 2,3 sowie relativ zu diesen verschiebbar eingespannt ist. Die Federkraft der Rückstellfeder 14 ist jedoch größer als die Federkraft des weiteren Federmittels 42. Dadurch wird eine betätigungsbedingte Verschiebung des Magnets 35 ermöglicht, selbst wenn der zweite Kolben 3 infolge einer Fahrdynamikregelung unverschiebbar fest gelegt ist.

Bei dem weiteren Federmittel 42 handelt es sich im Gegensatz zu den Rückstellfedern 14,15 ersichtlich um eine konische Schraubenfeder.

Die Ausführungsform nach Fig. 1 verfügt über den Vorteil, dass der Träger 39 für den Magneten 35 - bei einer Undichtigkeit im Bereich des zweiten Kolbens 3 (Sekundärbremskreis) - gleichzeitig zur Abstützung des ersten Kolbens 2 (Druckstangenkolbens) dient, indem der Träger 39 nach Komprimierung des Federmittels 42 in Anschlag an dem Kolben 3 gelangt.

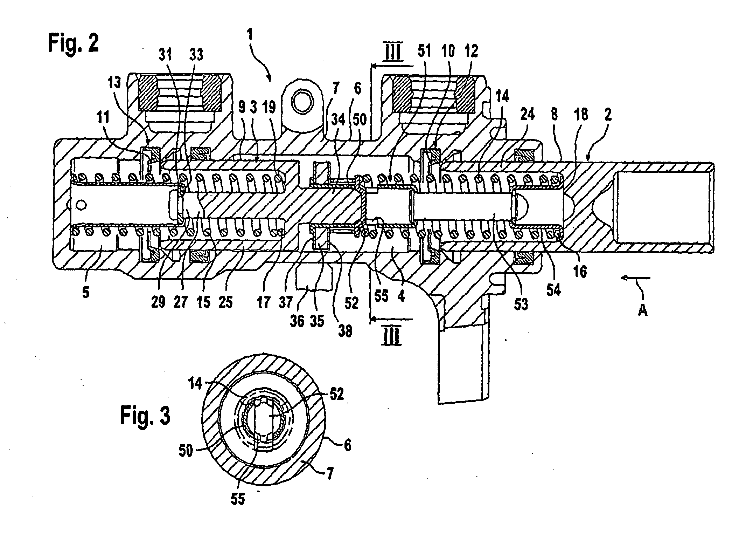

Die Ausführungsform nach Fig. 2 stimmt weitgehend mit der Ausführungsform nach Fig. 1 überein so dass übereinstimmende Merkmale mit übereinstimmenden Bezugsziffern gekennzeichnet sind, und auf eine Wiederholung diesbezüglicher Beschreibungsteile verzichtet wird. Nachstehend sei daher ausschließlich auf die wesentlichen Unterschiede eingegangen.

Der Träger 50 für den Magnet 35 ist als nichtmagnetische Hülse ausgebildet, die Bestandteil eines Käfigs 51 für die Rückstellfeder 14 ist. Der Käfig 51 weist die Hülse, eine Federaufnahme 52, eine Druckstange 53 sowie eine weitere Hülse 54 auf. Die beiden Hülsen (Träger 50, 54) und die Druckstange 53 sind mittels gegenseitiger Anschläge begrenzt teleskopierbar und bewirken gemäß dieser Ausführungsform im unbetätigten Zustand eine elastische Vorspannung der Rückstellfeder 14. Die Federaufnahme 52 ist innerhalb einer Ausnehmung 55 in Axialrichtung relativ zu der Hülse (Träger 50) verschiebbar, und stützt sich an einer Vorderseite des zapfenförmigen Kolbenabschnittes 34 ab, wodurch auch die Rückstellfeder 14 an dem Zapfen 34 abgestützt ist. Bei einer betätigungsbedingten Kompression der Rückstellfeder 14 erlaubt die Verschiebung der Druckstange 53 eine Expansion des weiteren Federmittels das bei dieser Ausführungsform als zylindrische Schraubenfeder ausgeführt ist. Dadurch wird eine Verschiebung des Magnets 35 in den Bereich des Sensorelementes 36 ermöglicht. Bei einem Druckverlust (Leckage) im Sekundärkreis des Kolbens 3 erfolgt über die Druckstange 53 eine mittige, unmittelbare Abstützung des Kolbens 2 (Druckstangenkolben) am Kolben 3 (Sekundärkolben).

Die Fig. 3 verdeutlicht in einem Querschnitt insbesondere die beschriebenen Bauteile Hülse (Träger 50), Federaufnahme 52, Rückstellfeder 14 und Gehäuse 6.

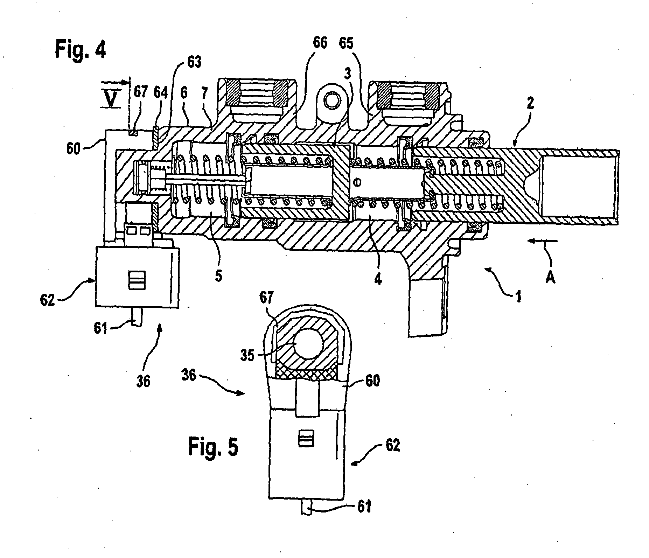

Um eine Austauschbarkeit und Einstellbarkeit eines Sensorelementes 36 zu ermöglichen, ist dieses bei einer nicht beanspruchten Vorrichtung gemäß Fig. 4 und 5 in einer Aufnahme 60 angeordnet, die in einer definierten Position an dem Gehäuse 6 fixierbar ist. Dabei ist das Sensorelement 36 als austauschbare Baueinheit zusammen mit starren Leiterelementen formschlüssig in der Aufnahme 60 aufgenommen. Der elektrischen Verbindung mit einer elektronischen Steuereinheit der Bremsanlage oder einer sonstigen, fahrzeugseitigen und mit der Bremsanlage vernetzten Steuereinheit dient eine elektrische Verbindungsleitung 61, die mit einer Steckvorrichtung 62 in die Aufnahme 60 einsteckbar ist.

Soweit keine Einstellbarkeit der Aufnahme 60 gefordert ist, kann diese an einen Sockel des Gehäuses 6 angeschraubt werden, wobei an dem Sockel definierte Wandungen oder Berührflächen zur Anlage der Aufnahme 60 vorgesehen sein können. In diesem Zusammenhang bietet es sich an, wenn die Aufnahme 60 ein Gehäuse aus Kunststoffwerkstoff aufweist, dessen Außenwandung im Bereich von Kontaktflächen sockelseitig mit Kontaktnasen versehen ist, welche sich beim Montieren der Aufnahme am Gehäuse 6 durch feste Anlage an den Berührflächen derart verformen, dass eine spielfreie Befestigung der Aufnahme vorliegt.

Bei einer anderen Abwandlung wird Einstellbarkeit dadurch gewährleistet, dass die Aufnahme 60 in Betätigungsrichtung eines Kolbens 2,3 sowie relativ zu dem Gehäuse 6 justierbar und in einer definierten Position fixierbar ist. Nach Fig. 4 weist das Gehäuse 6 einen Anschlag 63 für die Aufnahme 60 auf, wobei zwischen Anschlag 63 und Aufnahme 60 wenigstens ein präzise toleriertes Distanzelement 64 zur Gewährleistung einer definierten Relativlage zwischen Sensorelement 36 und Kolben 2,3 vorgesehen sind. Prinzipiell kann die Aufnahme 60 für die Lageüberwachung eines Druckstangenkolbens (Kolben 2) raumsparend zwischen zwei Druckmittelbehälteranschlüssen 65,66 angeordnet sein. Gemäß Fig. 4 ist die Aufnahme 60 jedoch an einem Gehäuseende vorgesehen, was eine gute Zugänglichkeit der Vorrichtung sicher stellt. Dabei dient eine gesonderte Klammer 67 zwischen Aufnahme 60 und Sensorelement 36 als formschlüssiges Sicherungselement gegen Lösen.

Die Fig. 5 verdeutlicht in einer schematischen Draufsicht das Sensorelement mit Aufnahme 60.

Die Bewegung und Ansteuerung des Magneten 35 erfolgen bei den Ausführungsformen gemäß den Fig. 2 bis 5 parallel zu den Bewegungen der beiden Kolben 2,3.

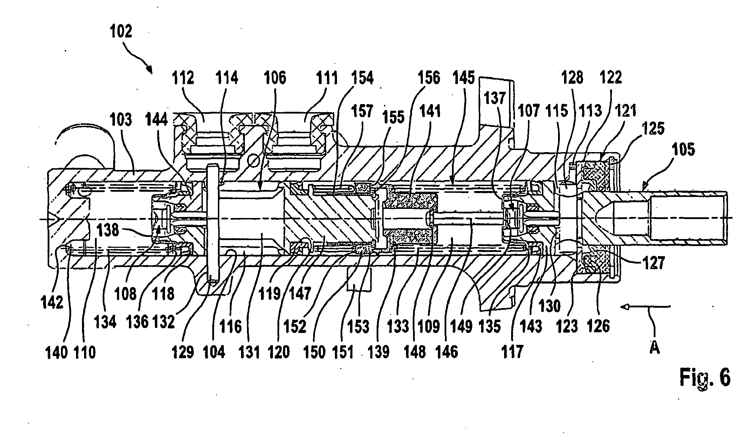

Der Hauptzylinder der Fig. 6 bis 19 ist als sogenannter Zentralventil-Tandem-Hauptzylinder 102 ausgestaltet. Dieser weist in seinem grundsätzlichen Aufbau ein Gehäuse 103 mit Längsbohrung 104 für einen hierin ersten Kolben (Druckstangenkolben) 105 und einen zweiten Kolben (Schwimmkolben) 106 auf. Ferner ist je Kolben 105,106 ein Zentralventil 107,108 vorgesehen. Das jeweilige Zentralventil 107,108 wechselwirkt zur Abdichtung eines zugehörigen Druckraumes 109,110 mit dem jeweiligen Kolben 105,106 unter Berücksichtigung eines vorgegebenen Schließweges.
Von einem nicht dargestellten Ausgleichsbehälter münden über Verbindungen 111,112 Nachlaufkanäle 113, 114 jeweils in Nachlaufräume 115,116, welche mittels Primärdichtmanschetten 117,118 gegenüber den dazugehörigen Druckräumen 109,110 abgedichtet sind. Weiter ist der Nachlaufraum 116 mittels einer Sekundärdichtmanschette 119 gegenüber dem ersten Druckraum 109 abgedichtet, wobei die Sekundärdichtmanschette 119 in einer umlaufenden Nut 120 des zweiten Kolbens 106 angeordnet ist.

Eine in einer Ausnehmung 122 angeordnete Dichtungsanordnung 121 dichtet den Nachlaufraum 115 gegenüber der Atmosphäre ab. Die Dichtungsanordnung 121 ist auf der dem Druckraum 109 zugewandten Seite von einer Scheibe 123 begrenzt, wobei ein Sicherungselement 125 die Dichtungsanordnung 121 sowie die Scheibe 123 in der Ausnehmung 122 sichert.
Die Dichtungsanordnung 121 weist einen Führungsring 126, welcher aus einem Kunststoff besteht und einer verschleißarmen Führung des ersten Kolbens 105 dient, sowie eine auf dem Führungsring 126 in Richtung des ersten Druckraumes 109 angeordnete Sekundärdichtmanschette 127 auf.

Die Zentralventile 107,108 werden in einem unbetätigten Zustand durch als Zylinderstifte ausgebildete Anschläge 128,129 offen gehalten, wobei sich die Anschläge 128,129 durch schlitzförmige Ausnehmungen 130,131 der Kolben 105,106 erstrecken. Der Anschlag 128 ist in der Längsbohrung 104 angeordnet, wobei er an der Scheibe 123 anschlägt. Dagegen ist der Anschlag 129 in einer Gehäusebohrung 132 des Gehäuses 103 fixiert und die schlitzförmige Ausnehmung 131 des zweiten Kolbens 106 ist in einem Bereich zwischen der Primärmanschettendichtung 118 und der Sekundärmanschettendichtung 119 angeordnet.

Jedem der Kolben 105,106 ist eine Rückstellfeder 133,134 zugeordnet, welche mit einem ersten Ende 135,136 an einer ersten Hülse 137,138 und mit einem zweiten Ende 139,140 an einer zweiten Hülse 141 bzw. an einem Gehäuseboden 142 abgestützt ist. Die erste Hülse 137,138 der Rückstellfeder 133,134 stützt sich dabei an einem ersten Kolbenabschnitt 143,144 des ersten bzw. des zweiten Kolbens 105,106 ab. Bei Kolbenverschiebung in eine Betätigungsrichtung A wird die Rückstellfeder 133,134 komprimiert und zwecks Kolbenrückstellung expandiert.

Die Funktionsweise des Zentralventil-Tandem-Hauptzylinders 102 ist grundsätzlich bekannt. Bei Betätigen eines nicht dargestellten Bremspedals wird der erste Kolben 105 in Betätigungsrichtung A nach links verschoben. Durch diese Linearbewegung des ersten Kolbens 105 schließt das zugehörige Zentralventil 107, so dass der korrespondierende Druckraum 109 gegenüber seiner Verbindung 111 über den Nachlaufkanal 113 und den Nachlaufraum 115 zu dem nicht dargestellten Ausgleichbehälter abgeschlossen ist. In Folge des sich hierdurch aufbauenden hydrostatischen Druckes im Druckraum 109 wird der zweite Kolben 106 synchron mit dem ersten Kolben 105 in Betätigungsrichtung A bewegt und schließt im zugehörigen Bremskreis sein Zentralventil 108. Nun baut sich in gleicher Weise in diesem Bremskreis hydraulischer Druck auf, weil der dortige Druckraum 110 gegenüber seiner Verbindung 112 über den Nachlaufkanal 114 und den Nachlaufraum 116 zum Ausgleichsbehälter verschlossen ist. Folglich herrscht in beiden Druckräumen 109,110 praktisch gleicher Hydraulikdruck, der sich auf nicht dargestellten Radbremsen überträgt.

Nachstehend wird im Einzelnen auf die Ausführungsform nach Fig. 6 eingegangen, welche den Zentralventil-Tandem-Hauptzylinder 102 im Längsschnitt zeigt.

Die Rückstellfeder 133 des ersten Kolbens 105 ist in einem Käfig 145 gehalten, welcher die erste Hülse 137, die zweite Hülse 141 sowie eine Druckstange 146 als Bestandteile aufweist. Die beiden Hülsen 137,141 und die Druckstange 146 sind mittels an der Druckstange 146 ausgebildeter Anschläge 148,149 begrenzt teleskopierbar und bewirken im unbetätigten Zustand eine elastische Vorspannung der Rückstellfeder 133.

Der zweite Kolben 106 weist einen zweiten, zapfenförmigen Kolbenabschnitt 147 auf, wodurch der zweite Kolben 106 im Unterschied zu den bekannten Kolben verlängert ausgeführt ist und diese Verlängerung als Mittel zur Führung eines Permanent-Magneten 150 dient. Der Permanent-Magnet 150, welcher seinerseits als Signalgeber für einen Stellungsgeber dient und ein Magnetfeld radial in Richtung eines Sensorelementes 151 - vorzugsweise in Gestalt eines Hall-Sensors, eines magnetoresistiven Sensors oder eines Reed-Kontaktes - aussendet, das ortsfest am Gehäuse 103 vorgesehen ist, und mit einer nicht gezeichneten elektronischen Steuereinheit verbindbar ist, um eine Lageerfassung zu ermöglichen. Dabei ist zu berücksichtigen, dass ein Hall-Sensor oder ein magnetoresistiver Sensor als aktives Bauteil auch eine Stromversorgung erfordert, während ein Reed-Kontakt als gesteuerter Schalter lediglich als Öffner oder Schließer eines Stromkreises wirksam ist. Das Sensorelement 151 kann zum Zweck einer besseren Vernetzung innerhalb eines Bus-Systems auch über lokale Intelligenz in Form eines sogenannten ASIC (Application Specific Integrated Circuit) verfügen.

Der Magnet 150 ist ringförmig und wie ersichtlich zwischen Scheiben 152,153 aus magnetischem Werkstoff auf einem zylindrischen Träger 154 aus nichtmagnetischem Werkstoff angeordnet, welcher über einen Bund 155 zur axialen Anlage des Magneten 150 verfügt. Der Träger 154 ist auf dem zweiten Kolbenabschnitt 147 begrenzt verschiebbar, welcher zur Verschiebewegbegrenzung des Trägers 154 und damit des Magneten 150 mit einen endseitigen Anschlag 156 versehen ist.

Durch die Ring-Form des Magneten 150 ist es möglich, das Sensorelement 151 nicht nur in einer, wie in Fig. 6 dargestellten Position zu befestigen, sondern an einer beliebigen Position entlang des Umfanges des Gehäuses 103.

Wie aus Fig. 6 hervorgeht, ist der Träger 154 mit dem Magneten 150 einerseits mittels der zweiten Hülse 141 von der Rückstellfeder 133 des ersten Kolbens 105 und andererseits von einem weiteren Federmittel 157, welches an dem zweiten Kolben 106 abgestützt ist, beaufschlagt, so dass der Magnet 150 gewissermaßen zwischen den Kolben 105,106 sowie relativ zu diesen verschiebbar eingespannt ist. Die Federkraft der Rückstellfeder 133 ist jedoch größer als die Federkraft des weiteren Federmittels 157. Dadurch wird eine betätigungsbedingte Verschiebung des Magnets 150 ermöglicht, selbst wenn der zweite Kolben 106 infolge einer Fahrdynamikregelung unverschiebbar fest gelegt ist, da die Bewegung der zweiten Hülse 141, welche sich an dem Bund 155 des Trägers 154 abstützt, die Bewegung des Magneten 150 sowie der Polscheiben 152,153 auslöst.

Diese Ausführungsform verfügt wie die Ausführungsform gemäß Fig. 1 über den Vorteil, dass der Träger 154 für den Magneten 150 - bei einer Undichtigkeit im Bereich des zweiten Kolbens 106 (Sekundärbremskreis) - gleichzeitig zur Abstützung des ersten Kolbens 105 dient, indem der Träger 154 nach Komprimierung des Federmittels 157 in Anschlag an dem Kolben 106 gelangt.

Die Bewegung und Ansteuerung des Magneten 150 erfolgen bei dieser Ausführungsform wie bei der Ausführungsform gemäß Fig. 1 in Reihe zu den Bewegungen der beiden Kolben 105,106.

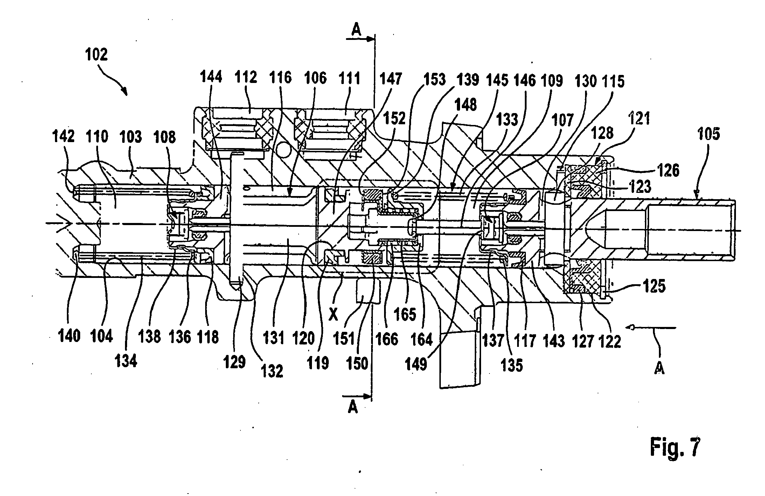

Die Ausführungsformen gemäß den nachstehend beschriebenen Fig. 7 bis 19 erlauben eine besonders bauraumoptimierte Ausgestaltung, da die Bewegung und die Ansteuerung des Magneten 150 parallel zu den Bewegungen der beiden Kolben 105,106 erfolgen.

Die Ausführungsformen nach den Fig. 7 bis 19 stimmen mit Ausnahme der Bewegung und Ansteuerung des Magnetes weitgehend mit der Ausführungsform nach Fig. 6 überein, so dass übereinstimmende Merkmale mit übereinstimmenden Bezugsziffern gekennzeichnet sind und auf eine Wiederholung diesbezüglicher Beschreibungsteile verzichtet wird. Nachstehend sei daher ausschließlich auf die wesentlichen Unterschiede eingegangen.

Im Unterschied zu der Ausführungsform gemäß Fig. 6 umfasst bei der Ausführungsform gemäß den Fig. 7 bis 10 der Käfig 145, in welcher die Rückstellfeder 133 des ersten Kolbens 105 gehalten wird, die erste und eine zweite Hülse 137,164, die Druckstange 146, einen nicht magnetischen, hülsenförmigen Träger 165 sowie ein weiteres Federmittel 166, dessen Federkraft kleiner ist als die der Rückstellfeder 133.

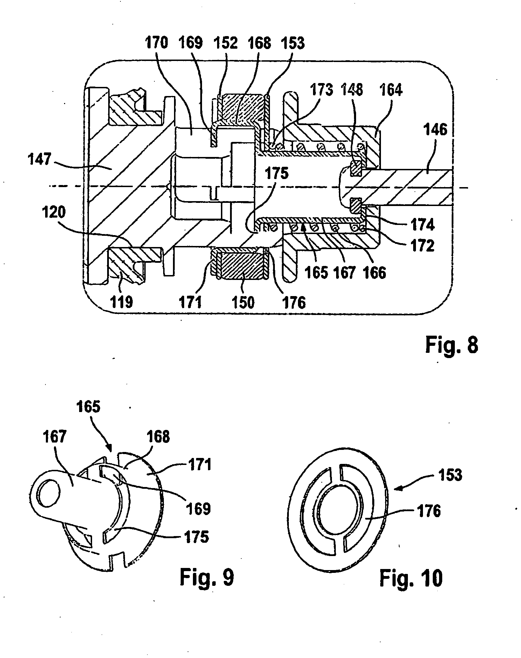

In Fig. 8 ist der Ausschnitt X der Fig. 7 vergrößert dargestellt. Hieraus ist ersichtlich, dass der Träger 165, welcher beispielsweise aus einem dünnen Blechwerkstoff durch ein Umformverfahren herstellbar ist, zwischen dem Anschlag 148 der Druckstange 146 und der zweiten Hülse 164 angeordnet ist. Da die Rückstellfeder 133 mit ihrem Ende 139 an der zweiten Hülse 164 anliegt, wird der Träger 165 durch die Vorspannung der zweiten Hülse 164 mittels der Rückstellfeder 133 in Betätigungsrichtung A in ihrer Anlage an dem Anschlag 148 gehalten. Die zweite Hülse 164 liegt wie aus Fig. 7 und 8 hervorgeht, an dem Kolbenabschnitt 147 des zweiten Kolbens 106 an.
Der Träger 165, welcher in Fig. 9 einzeln dargestellt ist, weist einen ersten zylindrischen Abschnitt 167 sowie einen zweiten zylindrischen Abschnitt 168 auf, wobei der zweite Abschnitt 168 einen größeren Durchmesser als der erste Abschnitt 167 aufweist. Der Permanent-Magnet 150 sowie die Scheibe 152 sind dabei auf dem zweiten zylindrischen Abschnitt 168 des Trägers 165 angeordnet.

Insbesondere aus Fig. 7 ist erkennbar, dass der Träger 165 mit seinem zweiten zylindrischen Abschnitt 168 auf dem zweiten Kolbenabschnitt 147 des zweiten Kolbens 106 geführt ist, wobei nach innen gerichtete, radiale Vorsprünge 169 zur Führung und Verdrehsicherung des Trägers 165 in Ausnehmungen 170 des zweiten Kolbenabschnittes 147 eingreifen. Der Permanent-Magnet 150 ist hier also nicht unmittelbar, sondern durch den Träger 165 mittelbar auf dem zweiten Kolbenabschnitt 147 des zweiten Kolbens 106 geführt.

Ein radial nach außen gerichteter Bund 171 des zweiten Abschnittes 168 dient der Anlage der Scheibe 152 und des Magneten 150. Das weitere Federmittel 166, welches in radialer Richtung zwischen der zweiten Hülse 164 und dem Träger 165 angeordnet ist, liegt mit ihrem ersten Ende 172 an einer Innenseite 174 der zweiten Hülse 164 und mit ihrem zweiten Ende 173 an der Scheibe 153 an, wodurch der Träger 165, der Magnet 150 sowie die Scheiben 152,153 vorgespannt in der in Fig. 7 und 8 gezeigten Stellung gehalten sind.

Aus Fig. 8 ist ersichtlich, dass der zweite Kolbenabschnitt 147 Ausnehmungen 175 des Trägers 165 sowie Ausnehmungen 176 der Scheibe 153, welche in Fig. 10 dargestellt ist, durchgreift und somit an der zweiten Hülse 164 anliegt.

Wenn der zweite Kolben 106 infolge einer Fahrdynamikregelung unverschiebbar fest gelegt ist, erlaubt bei einer betätigungsbedingten Kompression der Rückstellfeder 133 die Verschiebung der Druckstange 146 in Betätigungsrichtung A eine Expansion des weiteren Federmittels 166. Der Träger 165 wird mit dem Magnet 150 und den beiden Scheiben 152,153 dadurch in Betätigungsrichtung A in den Bereich des Sensorelementes 151 verschoben.

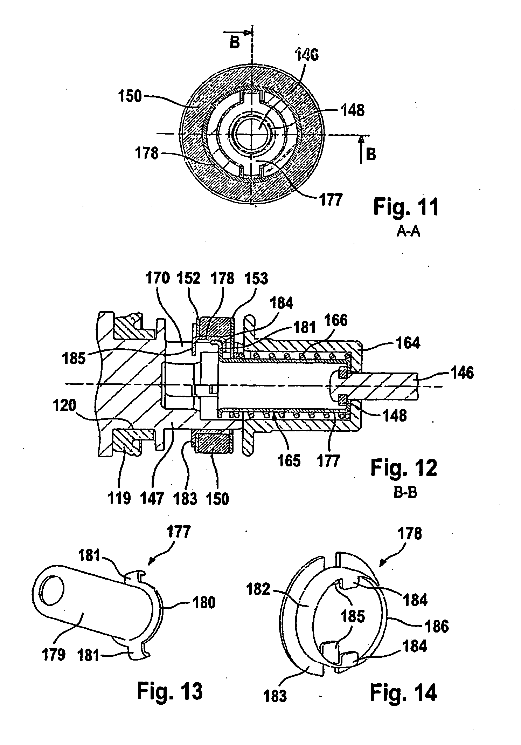

Die Ausführungsform gemäß den Fig. 11 bis 14 unterscheidet sich zu der vorstehend beschriebenen Ausführungsform gemäß den Fig. 7 bis 10 lediglich in der Ausgestaltung des Trägers 165, welcher bei der nachstehend beschriebenen Ausführungsform zweitteilig aus einer Federhülse 177 und einer Magnethülse 178 aufgebaut ist. Daher wird auf eine Gesamtansicht eines Zentralventil-Tandem-Hauptzylinders 102 im Längsschnitt für diese Ausführungsform verzichtet.

Fig. 11 zeigt einen Schnitt durch den Zentralventil-Tandem-Hauptzylinder 102 entlang einer Linie A-A, welche in Fig. 7 der vorstehend beschriebenen Ausführungsform angedeutet ist.

Aus Fig. 12, welche einen Schnitt entlang der Linie B-B durch Fig. 11 zeigt, ist ersichtlich, dass der Träger 165 dieser Ausführungsform aus den zwei Bauteilen Federhülse 177 und Magnethülse 178 besteht, sonst jedoch wie zu den Fig. 7 und 8 beschrieben an dem Anschlag 148 der Druckstange 146 anliegt und durch die Rückstellfeder 133 bzw. die Vorspannkraft der Rückstellfeder auf die zweite Hülse 164 in der gezeigten Stellung gehalten wird. Aus den Fig. 13 und 14, welche die Federhülse 177 bzw. die Magnethülse 178 zeigen, geht die Ausgestaltung deutlich hervor.

Insbesondere aus Fig. 13 ist erkennbar, dass die Federhülse 177 einen zylindrischen Abschnitt 179 und einen umlaufenden, radial nach außen gerichteten Bund 180 aufweist. Von dem Bund 180 treten zwei radiale Vorsprünge 181 hervor, welche einerseits der Verbindung mit der Magnethülse 178 und andererseits der Führung und Verdrehsicherung der Federhülse 177 in den Ausnehmungen 170 des zweiten Kolbenabschnittes 147 dienen.

Fig. 14 verdeutlicht, dass die Magnethülse 178 ebenfalls einen zylindrischen Abschnitt 182 sowie einen radial nach außen gerichteten Bund 183 aufweist. Weiter sind radial nach innen gerichtete Vorsprünge 184,185 vorgesehen, welche einerseits der Verbindung mit der Federhülse 177 und andererseits der Führung und Verdrehsicherung der Magnethülse 178 in den Ausnehmungen 170 des zweiten Kolbenabschnittes 147 dienen. Die Vorsprünge 184 sind dabei an einem Rand 186 des zylindrischen Abschnitts 182 vorgesehen. Die Vorsprünge 185 können beispielsweise durch umformtechnische Maßnahmen des Bundes 183 ausgeformt werden.

Der Magnet 150 ist, wie aus Fig. 12 ersichtlich ist, auf dem zylindrischen Abschnitt 182 der Magnethülse 178 angeordnet und die Scheibe 152 liegt durch die Vorspannung des weiteren Federmittels 166 an dem Bund 183 der Magnethülse 178 an. Die Vorsprünge 181 der Federhülse 177 sind im zusammengebauten Zustand des Trägers 165 zwischen den Vorsprüngen 184 und 185 der Magnethülse 178 vorgesehen. Da die Vorsprünge 181,184,185 in den Ausnehmungen 170 geführt sind, können sich die beiden Bauteile 177,178 nicht gegeneinander verdrehen, wodurch die Verbindung der beiden Bauteile 177,178 sichergestellt ist.

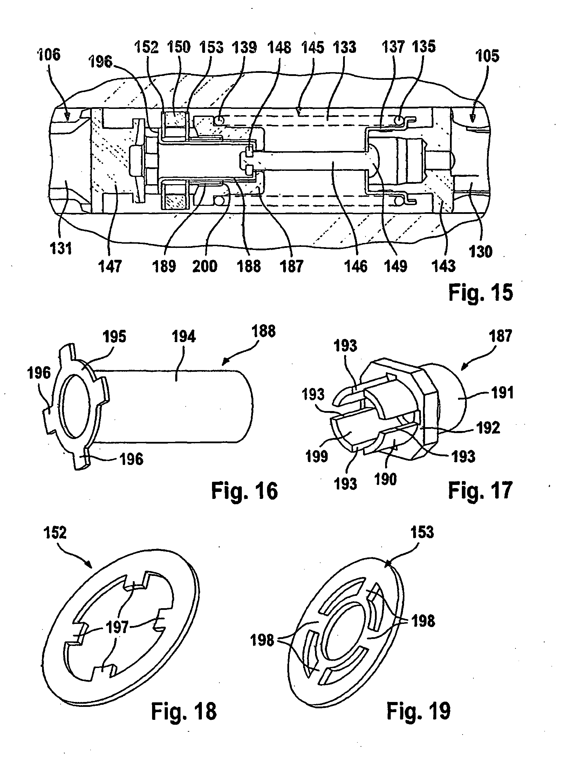

Die Fig. 15 bis 19 zeigen eine weitere Ausführungsform des Zentralventil-Tandem-Hauptzylinders 102. Der Käfig 145, in welcher die Rückstellfeder 133 des ersten Kolbens 105 gehalten wird, umfasst hier die erste und eine zweite Hülse 137,187, die Druckstange 146, einen nicht magnetischen, hülsenförmigen Träger 188 sowie ein weiteres Federmittel 189, dessen Federkraft kleiner ist als die der Rückstellfeder 133.

Wie aus Fig. 15, welche einen Ausschnitt eines Zentralventil-Tandem-Hauptzylinders 102 zeigt, hervorgeht, sind der Magnet 150 und die Scheiben 152,153 auf der zweiten Hülse 187 geführt angeordnet. Hierzu weist die zweite Hülse 187, wie insbesondere Fig. 17 zeigt, einen ersten und einen zweiten zylindrischen Abschnitt 190,191 sowie einen dazwischen angeordneten umlaufenden Bund 192 auf. Der erste zylindrische Abschnitt 190 ist mit schlitzförmigen, axialen Ausnehmungen 193 versehen, wobei der Magnet 150 auf dem ersten zylindrischen Abschnitt 190 geführt ist und die Ausnehmungen 193 der Führung des Trägers 188 und der Scheiben 152,153 dienen.

Aus Fig. 16 ist erkennbar, dass der Träger 188 ähnlich ausgestaltet ist wie die Federhülse 177 gemäß Fig. 16 und einen zylindrischen Abschnitt 194 und einen umlaufenden, radial nach außen gerichteten Bund 195 aufweist. Von dem Bund 195 treten radiale Vorsprünge 196 hervor, welche der Führung und Verdrehsicherung des Trägers 188 in den Ausnehmungen 193 der zweiten Hülse 187 sowie der Anlage der Scheibe 152 dienen. Hierzu weist die Scheibe 152, welche in Fig. 18 dargestellt ist, radial nach innen gerichtete Vorsprünge 197 auf.

Ebenso ist die Scheibe 153, die in Fig. 19 dargestellt ist, mit radialen Stegen 198 versehen, welche der Führung und Verdrehsicherung der Scheibe 153 in den Ausnehmungen 193 der zweiten Hülse 187 dienen.

Fig. 15 zeigt, dass der Träger 188 an dem Anschlag 148 der Druckstange 146 anliegt und zwischen dem Anschlag 148 und der zweiten Hülse 187 angeordnet ist. Die zweite Hülse 187 liegt an dem zweiten Kolbenabschnitt 147 an und der Bund 192 der zweiten Hülse 187 dient der Anlage des Endes 139 der Rückstellfeder 133 und damit deren Vorspannung. Dadurch wird auch der Träger 188 in der gezeigten Position gehalten.

Das weitere Federmittel 189 ist zwischen der Scheibe 153 und einem, auf einer Innenseite 199 der zweiten Hülse 187 befindlichen Absatz 200 vorgespannt gehalten.

Wenn der zweite Kolben 106 infolge einer Fahrdynamikregelung unverschiebbar fest gelegt ist, erlaubt bei einer betätigungsbedingten Kompression der Rückstellfeder 133 die Verschiebung der Druckstange 146 in Betätigungsrichtung A. Da die zweite Hülse 187 an dem zweiten Kolben 106 anliegt und nicht mit der Druckstange 146 verschoben wird, erfolgt eine Expansion des weiteren Federmittels 189. Der Träger 188 wird mit dem Magnet 150 und den beiden Scheiben 152,153 dadurch in Betätigungsrichtung A in den Bereich des Sensorelementes 151 verschoben.

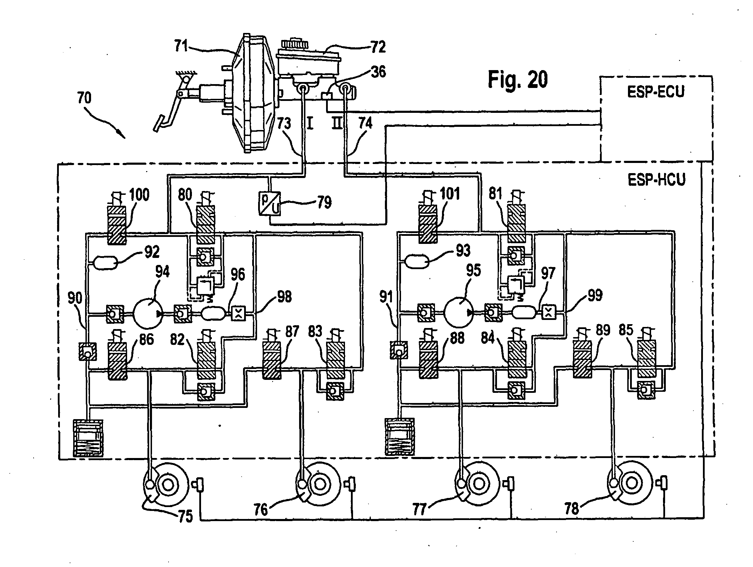

Die Fig. 20 dient zur Erläuterung einer Bremsanlage 70 mit Fahrdynamikregelung (ESP), bei der die Erfindung insbesondere einsetzbar ist. Die Bremsanlage 70 umfasst ein Bremsgerät mit einem pneumatischen Bremskraftverstärker 71, den Hauptzylinder 1 oder 102 mit einem Druckmittelvorratsbehälter 72, wobei Druckkammern des Hauptzylinders 1,102 über Bremsleitungen 73,74 mit Radbremsen 75-78 verbunden sind. Die Radbremsen 75-78 sind paarweise in sogenannten Bremskreisen I, II zusammengefasst. Bei den Bremskreisen I,II hat sich die sogenannte Diagonalaufteilung unter Zusammenfassung von diagonal gegenüberliegenden Radbremsen der Vorderachse und Hinterachse eines Fahrzeugs durchgesetzt, wobei prinzipiell auch andere Aufteilung wie beispielsweise die sogenannte Schwarz/Weiß Aufteilung unter paarweiser Kombination der Radbremsen einer Achse möglich ist.

Zur Erfassung eines fahrerseitig eingesteuerten Drucks dient ein Drucksensor 79 an der Bremsleitung 73, welche eine Druckkammer mit den Radbremsen 75,76 von Bremskreis I verbindet. Jede Bremsleitung 73,74 weist in Reihenschaltung elektromagnetische Trennventile 80,81 sowie für jede Radbremse 75-78 jeweils ein Einlassventil 82-85 sowie jeweils ein Auslassventil 86-89 auf. Die beiden Radbremsen 75,76;77,78 eines jeden Bremskreises I, II sind mit einer Rücklaufleitung 90,91 verbunden, in deren Leitungsabzweige pro Radbremse 75-78 jeweils das Auslassventil 86-89 eingesetzt ist. Stromabwärts zu den Auslassventilen 86-89 befindet sich in jeder Rücklaufleitung 90,91 ein Niederdruckspeicher 92,93 der mit einem Eingang einer elektromotorisch angetriebenen Druckmittelfördervorrichtung 94,95 verbunden ist, welche die beiden Bremskreise I, II speist. Zwischen einem Ausgang jeder Druckmittelfördervorrichtung 94,95 und dem zugehörigen Bremskreis I, II besteht mittels Druckkanal 96,97 und einem Abzweig 98,99 eine hydraulische Verbindung, wobei die Druckerhöhung in den Radbremsen 75-78 über die Einlassventile 82-85 regelbar ist. Dadurch ist über die Druckmittelfördervorrichtungen 94,95 Druck zwecks Fahrstabilitätseingriffen oder zum Bremsen in den Radbremsen 75-78 einsteuerbar, ohne auf einen zentralen Hochdruckspeicher wie bei elektrohydraulischen Bremsanlagen zurückgreifen zu müssen.

Um einen Wechsel zwischen ABS-Rückförderbetrieb (Förderrichtung in Richtung Hauptbremszylinder) und ASR oder ESP-Fahrdynamikregelungsbetrieb (Förderrichtung in Richtung Radbremsen) mittels der Druckmittelfördervorrichtungen 94,95 zu ermöglichen, ist im Ansaugzweig jeder Druckmittelfördervorrichtung 94,95 jeweils ein Umschaltventil 100,101 integriert, welches bei aktiver Fahrdynamikregelung eine Druckmittelverbindung zwischen dem Hauptzylinder 1 und dem Eingang der Druckmittelfördervorrichtungen 94,95 herzustellen vermag.

### Bezugszeichenliste

- 1: Hauptzylinder
- 2: Kolben
- 3: Kolben
- 4: Druckraum
- 5: Druckraum
- 6: Gehäuse
- 7: Gehäusewandung
- 8: Kolbenwandung
- 9: Kolbenwandung
- 10: Dichtlippe
- 11: Dichtlippe
- 12: Dichtmanschette
- 13: Dichtmanschette
- 14: Rückstellfeder
- 15: Rückstellfeder
- 16: Ende
- 17: Ende
- 18: Kolbenboden
- 19: Kolbenboden
- 20: Kragen
- 21: Kragen
- 22: Hülse
- 23: Hülse
- 24: Wandung
- 25: Wandung
- 26: Zapfen
- 27: Zapfen
- 28: Ende
- 29: Ende
- 30: Anschlag
- 31: Anschlag
- 32: Kragen
- 33: Kragen
- 34: Kolbenabschnitt
- 35: Magnet
- 36: Sensorelement
- 37: Scheibe
- 38: Scheibe
- 39: Träger
- 40: Bund
- 41: Anschlag
- 42: Federmittel

- 50: Träger
- 51: Käfig
- 52: Federaufnahme
- 53: Druckstange
- 54: Hülse
- 55: Ausnehmung

- 60: Aufnahme
- 61: Verbindungsleitung
- 62: Steckvorrichtung
- 63: Anschlag
- 64: Distanzelement
- 65: Druckmittelbehälteranschluss
- 66: Druckmittelbehälteranschluss
- 67: Klammer

- 70: Bremsanlage
- 71: Bremskraftverstärker
- 72: Druckmittelvorratsbehälter
- 73: Bremsleitung
- 74: Bremsleitung
- 75: Radbremse
- 76: Radbremse
- 77: Radbremse
- 78: Radbremse
- 79: Drucksensor
- 80: Trennventil
- 81: Trennventil
- 82: Einlaßventil
- 83: Einlaßventil
- 84: Einlaßventil
- 85: Einlaßventil
- 86: Auslaßventil
- 87: Auslaßventil
- 88: Auslaßventil
- 89: Auslaßventil
- 90: Rücklaufleitung
- 91: Rücklaufleitung
- 92: Niederdruckspeicher
- 93: Niederdruckspeicher
- 94: Druckmittelfördervorrichtung
- 95: Druckmittelfördervorrichtung
- 96: Druckkanal
- 97: Druckkanal
- 98: Abzweig
- 99: Abzweig
- 100: Umschaltventil
- 101: Umschaltventil
- 102: Hauptzylinder
- 103: Gehäuse
- 104: Längsbohrung
- 105: Kolben
- 106: Kolben

- 107: Zentralventil
- 108: Zentralventil
- 109: Druckraum
- 110: Druckraum
- 111: Verbindung
- 112: Verbindung
- 113: Nachlaufkanal
- 114: Nachlaufkanal
- 115: Nachlaufraum
- 116: Nachlaufraum
- 117: Primärmanschettendichtung
- 118: Primärmanschettendichtung
- 119: Sekundärmanschettendichtung
- 120: Nut
- 121: Dichtungsanordnung
- 122: Ausnehmung
- 123: Scheibe

- 125: Sicherungselement
- 126: Führungsring
- 127: Sekundärmanschettendichtung
- 128: Anschlag
- 129: Anschlag
- 130: Ausnehmung
- 131: Ausnehmung
- 132: Gehäusebohrung
- 133: Rückstellfeder
- 134: Rückstellfeder
- 135: Ende
- 136: Ende
- 137: Hülse
- 138: Hülse
- 139: Ende
- 140: Ende
- 141: Hülse
- 142: Gehäuseboden
- 143: Kolbenabschnitt
- 144: Kolbenabschnitt
- 145: Käfig
- 146: Druckstange
- 147: Kolbenabschnitt
- 148: Anschlag
- 149: Anschlag
- 150: Magnet
- 151: Sensorelement
- 152: Scheibe
- 153: Scheibe
- 154: Träger
- 155: Bund
- 156: Anschlag
- 157: Federmittel

- 164: Hülse
- 165: Träger
- 166: Federmittel
- 167: Abschnitt
- 168: Abschnitt
- 169: Vorsprung
- 170: Ausnehmung
- 171: Bund
- 172: Ende
- 173: Ende
- 174: Innenseite
- 175: Ausnehmung
- 176: Ausnehmung
- 177: Federhülse

- 178: Magnethülse
- 179: Abschnitt
- 180: Bund
- 181: Vorsprung
- 182: Abschnitt
- 183: Bund
- 184: Vorsprung
- 185: Vorsprung
- 186: Rand
- 187: Hülse
- 188: Träger
- 189: Federmittel
- 190: Abschnitt
- 191: Abschnitt
- 192: Bund
- 193: Ausnehmung
- 194: Abschnitt
- 195: Bund
- 196: Vorsprung
- 197: Vorsprung
- 198: Steg
- 199: Innenseite
- 200: Absatz

- A: Betätigungsrichtung

## Patentansprüche

1. Vorrichtung zur Überwachung von Position und Bewegung eines Bremspedals, umfassend einen Hauptzylinder (1;102) mit einem ersten und einem zweiten innerhalb eines Gehäuses (6; 103) verschiebbaren Kolben (2,3;105,106) für einen ersten und einen zweiten Druckraum (4,5;109,110), mit integriertem Stellungsgeber zur Überwachung der Lage von einem der Kolben (2,3;105,106) zur Verwendung innerhalb eines geregelten Bremssystems für Kraftfahrzeuge, insbesondere mit Fahrdynamikregelung, wobei der Stellungsgeber einen Magneten (35;150) als Signalgeber aufweist, welcher ein Magnetfeld in Richtung eines Sensorelementes (36; 151) aussendet, das ortsfest am Gehäuse (6; 103) angeordnet ist, und mit einer elektronischen Steuereinheit verbindbar ist, **dadurch gekennzeichnet, dass** der Magnet (35; 150) zwischen dem ersten und dem zweiten Kolben (2,3;105,106) angeordnet, wobei wenigstens zwei Federmittel vorgesehen sind, mit denen der Magnet (35;150) zwischen den Kolben (2,3;105,106) gehalten, sowie den Kolben (2,3;105,106) relativ verschiebbar angeordnet ist.

2. Vorrichtung nach Anspruch 1, **dadurch gekennzeichnet, dass** die Federmittel eine am ersten Kolben (2;105) abgestützte Rückstellfeder (14;133) und ein an dem Magneten (35;150) abgestütztes weiteres Federmittel (42;157;166;189) umfassen, wobei das weitere Federmittel (42;157;166;189) eine größere Nachgiebigkeit aufweist als die Rückstellfeder (14;133).

3. Vorrichtung nach Anspruch 2, **dadurch gekennzeichnet, dass** das Sensorelement (36; 151) wenigstens einen Hall-Sensor aufweist.

4. Vorrichtung nach Anspruch 2 oder 3, **dadurch gekennzeichnet, dass** der zweite Kolben (3;106) Mittel zur Führung des Magneten (35;150) aufweist.

5. Vorrichtung nach Anspruch 4, **dadurch gekennzeichnet, dass** der zweite kolben (3;106) zur Führung des Magneten (35;150) einen zapfenförmigen Kolbenabschnitt (34;147) aufweist.

6. Vorrichtung nach Anspruch 5, **dadurch gekennzeichnet, dass** zwischen dem Magneten (35;150) und dem Kolbenabschnitt (34;147) ein Träger (39;50;154;165) aus nichtmagnetischem Werkstoff angeordnet ist, und dass der Magnet (35;150) in Axialrichtung zwischen Scheiben (37,38;152,153) aus einem Eisenwerkstoff angeordnet ist.

7. Vorrichtung nach Anspruch 6, **dadurch gekennzeichnet, dass** der Träger (39;50;154;165) einteilig und im wesentlichen zylindrisch ausgestaltet ist.

8. Vorrichtung nach Anspruch 7, **dadurch gekennzeichnet, dass** der Träger (39;154) einen Bund (40;155) zur axialen Anlage des Magneten (35;150) aufweist und an dem Kolbenabschnitt (34,147) ein Anschlag (41;156) zur Begrenzung des relativen Verschiebewegs des Trägers (39;154) in Bezug auf den zweiten Kolben (3;106) vorgesehen ist, wobei das weitere Federmittel (42;157) am zweiten Kolben (3;106) abgestützt ist.

9. Vorrichtung nach Anspruch 8, **dadurch gekennzeichnet, dass** die Rückstellfeder (14) zumindest teilweise innerhalb einer topfförmigen Wandung (24) des ersten Kolbens (2) angeordnet ist, sowie mittig von einem Zapfen (26) mit einem Anschlag (30) durchragt ist, an dem eine Hülse (22) derart festgelegt ist, so dass bei Betätigungsverschiebung des ersten Kolbens (2) das Mittel zur Führung des Magneten (35) axial sowie teleskopisch in das Innere der Hülse (22) eintaucht.

10. Vorrichtung nach Anspruch 9, **dadurch gekennzeichnet, dass** der Träger (165) einen ersten zylindrischen Abschnitt (167) und einen zweiten zylindrischen Abschnitt (168) aufweist, wobei der Magnet (150) auf dem zweiten zylindrischen Abschnitt (168) des Trägers (165) angeordnet ist und der Träger (165) mit seinem zweiten zylindrischen Abschnitt (168) auf dem Kolbenabschnitt (147) des zweiten Kolbens (106) geführt ist.

11. Vorrichtung nach Anspruch 10, **dadurch gekennzeichnet, dass** der Träger (165) radial nach innen gerichtete Vorsprünge (169) aufweist, welche zur Führung und Verdrehsicherung des Trägers (165) auf dem Kolbenabschnitt (147) in Ausnehmungen (170) des zweiten Kolbenabschnittes (147) eingreifen.

12. Vorrichtung nach Anspruch 6, **dadurch gekennzeichnet, dass** der Träger (165) mehrteilig ausgestaltet ist und eine Federhülse (177) sowie eine Magnethülse (178) aufweist, wobei an der Federhülse (177) radial nach außen gerichtete Vorsprünge (181) vorgesehen sind, welche zur Verbindung mit der Magnethülse (178) zwischen radial nach innen gerichteten Vorsprünge (184,185) der Magnethülse (178) angeordnet sind, wobei die Vorsprünge (181,184,185) zur Führung und Verdrehsicherung des Trägers (165) auf dem Kolbenabschnitt (147) in Ausnehmungen (170) des zweiten Kolbenabschnittes (147) eingreifen und der Magnet (150) auf der Magnethülse (178) angeordnet ist.

13. Vorrichtung nach einem der Ansprüche 2 bis 12, **dadurch gekennzeichnet, dass** die Rückstellfeder (14;133) und das weitere Federmittel (42;166;189) anhand eines Käfig (51;145) derart elastisch vorgespannt zusammengefügt sind, dass eine Betätigungsverschiebung des Kolbens (2;105) eine Kompression der Rückstellfeder (14;133) sowie eine Expansion des weiteren Federmittels (42;166;189) ermöglicht, um eine proportionale Relativverschiebung des Magnets (35;150) in bezug auf den ersten Kolben (2;105) zu erlauben.

14. Vorrichtung nach Anspruch 13, **dadurch gekennzeichnet, dass** der Käfig (51) eine Hülse zur Lagerung des Magneten (35) und eine, daran begrenzt verschiebbar angeordnete sowie durch Rückstellfeder (14) und Federmittel (42) beaufschlagte Federaufnahme (52) aufweist, welche bei einer Betätigungsverschiebung des ersten Kolbens (2) derart an den zweiten Kolben (3) anlegbar ist, dass Hülse und Magnet (35) unter Expansion des Federmittels (42) relativ zu dem zweiten Kolben (3) in Betätigungsrichtung (A) verschoben werden.

15. Vorrichtung nach Anspruch 13, **dadurch gekennzeichnet, dass** der Käfig (145) eine erste Hülse (137) und eine zweite Hülse (164;187) zur Vorspannung der Rückstellfeder (133) sowie einen Träger (165;188) aufweist, wobei bei einer Betätigungsverschiebung des ersten Kolbens (105) der Magnet (150) unter Expansion des weiteren Federmittels (166;189) relativ zu dem zweiten Kolben (106) in Betätigungsrichtung (A) verschoben wird.

16. Vorrichtung nach Anspruch 15, **dadurch gekennzeichnet, dass** der Magnet (150) auf der zweiten Hülse (187) geführt angeordnet ist und der Träger (188) radial nach außen gerichtete Vorsprünge (196) aufweist, welche in Ausnehmungen (193) der zweiten Hülse (187) geführt sind.

17. Vorrichtung nach Anspruch 16, **dadurch gekennzeichnet, dass** der Magnet (150) in Axialrichtung zwischen Scheiben (152,153) aus einem Eisenwerkstoff angeordnet ist, welche radial nach innen gerichtet Vorsprünge (197) und Stege (198) aufweisen, welche in den Ausnehmungen (193) der zweiten Hülse (187) geführt sind.

18. Vorrichtung nach Anspruch 17, **dadurch gekennzeichnet, dass** die zweite Hülse (187) auf einer Innenseite (199) einen Absatz (200) aufweist und das weitere Federmittel (189) zwischen dem Absatz (200) und der Scheibe (153) vorgespannt angeordnet ist.

19. Vorrichtung nach Anspruch 17, **dadurch gekennzeichnet, dass** ein weiteres Federmittel zwischen der ersten Hülse und dem Träger vorgespannt angeordnet ist.

## Claims

1. Device for monitoring the position and movement of a brake pedal, comprising a master cylinder (1; 102) with a first and a second piston (2, 3; 105, 106) displaceable within a housing (6; 103) for a first and a second pressure chamber (4, 5; 109, 110), with an integrated position generator for monitoring the position of one of the pistons (2, 3; 105, 106) for use in a controlled brake system for motor vehicles, in particular with driving dynamics control, and the position generator includes a magnet (35; 150) as a signal transmitter which transmits a magnetic field in the direction of a sensor element (36; 151) being stationary on the housing (6; 103), and is connectable to an electronic control unit,
**characterized in that** the magnet (35; 150) is arranged between the first and the second pistons (2, 3; 105, 106), wherein at least two spring means are provided, by way of which the magnet (35; 150) is retained between the pistons (2, 3; 105, 106) and is arranged so as to be displaceable in relation to the pistons (2, 3; 105, 106).

2. Device according to Claim 1,
**characterized in that** the spring means comprise a resetting spring (14; 133) supported on the first piston (2; 105) and an additional spring means (42; 157; 166; 189) supported on the magnet (35; 150), with the additional spring means (42; 157; 166; 189) showing a higher degree of resiliency than the resetting spring (14; 133).

3. Device according to Claim 2,
**characterized in that** the sensor element (36; 151) comprises at least one Hall sensor.

4. Device according to Claim 2 or 3,
**characterized in that** the second piston (3; 106) includes a means for guiding the magnet (35; 150).

5. Device according to Claim 4,
**characterized in that** the second piston (3; 106) has a peg-shaped piston portion (34; 147) to guide the magnet (35; 150).

6. Device according to Claim 5,
**characterized in that** a support member (39; 50; 154; 165) made of a non-magnetic material is arranged between the magnet (35; 150) and the piston portion (34; 147), and **in that** the magnet (35; 150) is interposed in an axial direction between plates (37, 38; 152, 153) made of an iron material.

7. Device according to Claim 6,
**characterized in that** the support member (39; 50; 154; 165) has a one-part and substantially cylindrical design.

8. Device according to Claim 7,
c h a r a c t e r i z e d in that the support member (39; 154) has a bead (40; 155) for the axial abutment of the magnet (35; 150), and a stop (41; 156) is provided at the piston portion (34, 147) for limiting the relative displacement travel of the support member (39; 154) with respect to the second piston (3; 106), with the additional spring means (42; 157) being supported on the second piston (3; 106).

9. Device according to Claim 8,
**characterized in that** the resetting spring (14) is arranged at least partly within a bowl-shaped wall (24) of the first piston (2) and is centrally penetrated by a peg (26) with a stop (30), on which a sleeve (22) is fixed in position in such a fashion that, upon displacement of the first piston (2) during actuation, the means for guiding the magnet (35) plunges axially and telescopically into the interior of the sleeve (22).

10. Device according to Claim 9,
**characterized in that** the support member (165) includes a first cylindrical portion (167) and a second cylindrical portion (168), and the magnet (150) is arranged on the second cylindrical portion (168) of the support member (165), while the support member (165) with its second cylindrical portion (168) is guided on the piston portion (147) of the second piston (106).

11. Device according to Claim 10,
**characterized in that** the support member (165) has projections (169) which point radially inwards and, as a guide and rotation-prevention mechanism of the support member (165) on the piston portion (147), engage into recesses (170) of the second piston portion (147).

12. Device according to Claim 6,
**characterized in that** the support member (165) has a multi-part design and includes a spring sleeve (177) and a magnet sleeve (178), and the spring sleeve (177) includes radially outwards pointing projections (181) being arranged between radially inwards pointing projections (184, 185) of the magnet sleeve (178) for the connection with the magnet sleeve (178), with said projections (181, 184, 185), as a guide and a rotation-prevention mechanism of the support member (165) on the piston portion (147), engaging into recesses (170) of the second piston portion (147), and with the magnet (150) being arranged on the magnet sleeve (178).

13. Device according to any one of Claims 2 to 12,
**characterized in that** the resetting spring (14; 133) and the additional spring means (42; 166; 189) are joined in an elastically biased manner by means of a cage (51; 145) in such a fashion that displacement of the piston (2; 105) during actuation allows compression of the resetting spring (14; 133) and expansion of the additional spring means (42; 166; 189) in order to render possible a proportional relative displacement of the magnet (35; 150) in relation to the first piston (2; 105).

14. Device according to Claim 13,
**characterized in that** the cage (51) includes a sleeve for the mounting support of the magnet (35) and a spring accommodation (52) which is arranged thereon so as to be displaceable within limits and is acted upon by resetting spring (14) and spring means (42), which spring accommodation, when the first piston (2) is displaced during actuation, is movable into abutment on the second piston (3) in such a fashion that sleeve and magnet (35) are displaced in the actuating direction (A) in relation to the second piston (3) by way of expansion of the spring means (42).

15. Device according to Claim 13,
**characterized in that** the cage (145) has a first sleeve (137) and a second sleeve (164; 187) for preloading the resetting spring (133) and a support member (165; 188), wherein upon displacement of the first piston (105) during actuation, the magnet (150) is displaced in relation to the second piston (106) in the actuating direction (A) by way of expansion of the additional spring means (166; 189).

16. Device according to Claim 15,
**characterized in that** the magnet (150) is guided and arranged on the second sleeve (187), and the support member (188) has projections (196) pointing radially outwards and being guided in recesses (193) of the second sleeve (187).

17. Device according to Claim 16,
**characterized in that** the magnet (150) is interposed in an axial direction between plates (152, 153) made of an iron material, which include radially inwards pointing projections (197) and webs (198) that are guided in the recesses (193) of the second sleeve (187).

18. Device according to Claim 17,
**characterized in that** the second sleeve (187) has a step (200) on an inside surface (199), and the additional spring means (189) is arranged between the step (200) and the plate (153) in a biased manner.

19. Device according to Claim 17,
**characterized in that** an additional spring means is interposed in a biased manner between the first sleeve and the support member.

## Revendications

1. Dispositif de surveillance de la position et du déplacement d'une pédale de frein, comprenant un maître cylindre (1; 102) avec un premier et un deuxième pistons déplaçables (2, 3; 105, 106) à l'intérieur d'un boîtier (6; 103) pour une première et une deuxième chambres sous pression (4, 5; 109, 110), avec un capteur de position intégré pour la surveillance de la position d'un des pistons (2, 3; 105, 106) pour une utilisation à l'intérieur d'un système de freinage régulé pour véhicule automobile, en particulier avec un réglage de la dynamique de trajectoire, dans lequel le capteur de position comprend un aimant (35; 150) comme un capteur de signal, qui envoie un champ magnétique dans la direction d'un élément de détection (36; 151), qui est agencé de manière fixe au boîtier (6; 103), et est raccordable avec une unité de commande électronique, **caractérisé en ce que** l'aimant (35; 150) est agencé entre le premier et le deuxième pistons (2, 3; 105, 106), au moins deux moyens de ressort étant prévus, avec lesquels l'aimant (35; 150) est maintenu entre les pistons (2, 3; 105, 106), de même qu'il est agencé de manière déplaçable par rapport aux pistons (2, 3; 105, 106).

2. Dispositif selon la revendication 1, **caractérisé en ce que** le moyen de ressort comprend un ressort de rappel (14; 133) supporté par un premier piston (2; 105) et un autre moyen de ressort (42; 157; 166; 189) supporté par l'aimant (35; 150), dans lequel l'autre moyen de ressort (42; 157; 166; 189) présente une flexibilité supérieure à celle du ressort de rappel (14; 133).

3. Dispositif selon la revendication 2, l'élément de détection (36; 151) comprend au moins un capteur à effet Hall.

4. Dispositif selon la revendication 2 ou 3, **caractérisé en ce que** le deuxième piston (3; 106) comprend un moyen de guidage de l'aimant (35; 150).

5. Dispositif selon la revendication 4, **caractérisé en ce que** le deuxième piston (3; 106) comprend une section de piston conique (34; 147) pour le guidage de l'aimant (35; 150).

6. Dispositif selon la revendication 5, **caractérisé en ce qu'**un support (39; 50; 154; 165) en matériau non magnétique est agencé entre l'aimant (35; 150) et la section de piston (34; 147), et **en ce que** l'aimant (35; 150) est agencé dans une direction axiale entre des disques (37, 38; 152 ,153) en un matériau ferreux.

7. Dispositif selon la revendication 6, **caractérisé en ce que** le support (39; 50; 154; 165) est réalisé en une seule pièce et est essentiellement cylindrique.

8. Dispositif selon la revendication 7, **caractérisé en ce que** le support (39; 154) comprend un raccord (40; 155) pour le logement axial de l'aimant (35; 150) et une butée (41; 156) sur la section de piston (34, 147) est prévue pour limiter le déplacement relatif du support (39; 154) par rapport au deuxième piston (3; 106), dans lequel l'autre moyen de ressort (42; 157) est supporté par le deuxième piston (3; 106).

9. Dispositif selon la revendication 8, **caractérisé en ce que** le ressort de rappel (14) est agencé au moins partiellement à l'intérieur d'une paroi en forme de creuset (24) du premier piston (2), de même qu'il traverse à partir d'un pivot (26) avec une butée (30), à laquelle est fixée une douille (22), de sorte que par le déplacement utile du premier piston (2) le moyen de guidage de l'aimant (35) pénètre de manière axiale et télescopique dans l'intérieur de la douille (22).

10. Dispositif selon la revendication 9, **caractérisé en ce que** le support (165) comprend une première section cylindrique (167) et une deuxième section cylindrique (168), dans lequel l'aimant (150) est agencé sur la deuxième section cylindrique (168) du support (165) et le support (165) est guidé avec sa deuxième section cylindrique (168) sur la section de piston (147) du deuxième piston (106).

11. Dispositif selon la revendication 10, **caractérisé en ce que** le support (165) comprend des saillies radiales orientées vers l'intérieur (169), qui engrènent des évidements (170) de la deuxième section de piston (147) pour le guidage et la sécurité de torsion du support (165) sur la section de piston (147).

12. Dispositif selon la revendication 6, **caractérisé en ce que** le support (165) est réalisé en plusieurs pièces et comprend une douille de ressort (177) ainsi qu'une douille d'aimant (178), dans lequel des saillies radiales orientées vers l'extérieur (181) sont prévues sur la douille de ressort (177), qui sont agencées entre des saillies radiales orientées vers l'intérieur (184, 185) de la douille d'aimant (178) pour relier la douille d'aimant (178), dans lequel les saillies (180, 184, 185) pour le guidage et la sécurité de torsion du support (165) sur la section de piston (147) engrènent des évidements (170) de la deuxième section de piston (147) et l'aimant (150) est agencé sur la douille d'aimant (178).

13. Dispositif selon l'une des revendications 2 à 12, **caractérisé en ce que** le ressort de rappel (14; 133) et l'autre moyen de ressort (42; 166; 189) sont assemblés de manière élastique contrainte au moyen d'une cage (51; 145), de sorte qu'un déplacement utile du piston (2; 105) rend possible une compression du ressort de rappel (14; 133) ainsi qu'une expansion de l'autre moyen de ressort (42; 166; 189), pour permettre un déplacement relatif proportionnel de l'aimant (35; 150) par rapport au premier piston (2; 105).

14. Dispositif selon la revendication 13, **caractérisé en ce que** la cage (51) comprend une douille de stockage de l'aimant (35) et un logement de ressort (52) disposé de manière déplaçable limité ainsi que par un ressort de rappel (14) et un moyen de ressort (42), qui est mobile lors d'un déplacement utile du premier piston (2) par rapport au deuxième piston (3), **en ce que** la douille et l'aimant (35) sous l'expansion du moyen de ressort (42) sont déplacés par rapport au deuxième piston (3) dans une direction d'actionnement (A).

15. Dispositif selon la revendication 13, **caractérisé en ce que** la cage (145) comprend une première douille (137) et une deuxième douille (164; 187) pour contraindre le ressort de rappel (133) ainsi qu'un support (165; 188), dans lequel l'aimant (150) sous l'expansion de l'autre moyen de ressort (166; 189) est déplacé par rapport au deuxième piston (106) dans une direction d'actionnement (A) lors d'un déplacement utile du premier piston (105).

16. Dispositif selon la revendication 15, **caractérisé en ce que** l'aimant (150) est agencé de manière guidée sur la deuxième douille (187) et le support (188) comprend des saillies radiales orientées vers l'extérieur (196), qui sont introduites dans des évidements (193) de la deuxième douille (187).

17. Dispositif selon la revendication 16, **caractérisé en ce que** l'aimant (150) est agencé dans une direction axiale entre deux disques (152, 153) en un matériau ferreux, qui comprennent des saillies radiales orientées vers l'intérieur (197) et une tige (198), qui sont introduites dans les évidements (193) de la deuxième douille (187).

18. Dispositif selon la revendication 17, **caractérisé en ce que** la deuxième douille (187) comprend une butée (200) sur un côté intérieur (199) et l'autre moyen de ressort (189) est agencé de manière contrainte entre la butée (200) et le disque (153).

19. Dispositif selon la revendication 17, **caractérisé en ce qu'**un autre moyen de ressort est agencé de manière contrainte entre la première douille et le support.
